# FASCICULE DE BREVET EUROPEEN

(11) **EP 1 171 279 B1**
(45) Date de publication et mention de la délivrance du brevet: **07.05.2003**
(21) Numéro de dépôt: 99972966.8
(22) Date de dépôt: 01.12.1999
(51) Int. Cl.: B29C 70/02

(54) **MATERIAU COMPOSITE CELLULAIRE ET PRODUITS OBTENUS A PARTIR DE CE MATERIAU**
ZELLFÖRMIGES COMPOSITE-MATERIAL UND DARAUS ERHALTENE PRODUKTE
COMPOSITE CELLULAR MATERIAL AND PRODUCTS OBTAINED THEREFROM

(30) Priorité: 01.12.1998 FR 9815254
(43) Date de publication de la demande: 16.01.2002
(73) Titulaire: 21 Composites S.A., 57300 Tremery (FR)
(72) Inventeur: BOUR, Yves, F-57140 Woippy (FR); PAULICK, Carl, F-57580 Trany (FR); SCHMITT, Yves, F-57070 Vantoux (FR); ROYER, François-Xavier, F-57180 Terville (FR)
(74) Mandataire: Poupon, Michel
(86) Numéro de dépôt international: FR9902969
(87) Numéro de publication internationale: WO00032380

(56) Documents cités:
- CA-A- 1 063 747
- CH-A- 502 886
- DE-A- 1 925 327
- DE-A- 19 544 429
- US-A- 4 595 623
- US-A- 4 935 294
- US-A- 5 017 629

## Description

La présente invention a pour objet un matériau composite cellulaire du type comprenant des billes de faible densité en matériau expansé noyées dans un liant composite constitué principalement d'une matrice en résine et d'une charge de renforcement se présentant sous la forme de fibres courtes et/ou de micro sphères.

un tel matériau est connu du doument CH-A-502 886.

L'invention concerne également les produits obtenus à partir du matériau composite cellulaire conforme à l'invention.

On connaît déjà, entre autres, du document EP-A-0 714 755 des matériaux composites obtenus à partir de fibres servant de renforts sous forme de matelas fibreux, des particules sphériques servant à alléger le produit final et des résines servant de liant entre les particules.

Dans des structures de ce type, il n'est possible d'obtenir que des structures planes. Le procédé décrit laisse supposer qu'il n'y a pas une bonne liaison entre la résine et les fibres, ce qui est très néfaste pour la résistance mécanique. Il s'agit d'un matériau type SMC (= sheet moulding compound) allégé au détriment de la résistance mécanique.

L'anisotropie est plus le résultat de l'utilisation du matelas fibreux. Ainsi ce document décrit un procédé de couture pour comprimer ces matelas contenant des billes en matière expansée avant que l'ensemble soit imprégné

De la même manière, on a décrit dans le document CH-A-502886 la fabrication d'un matériau composite cellulaire, réalisé avec des fibres de verre de 0,5 à 3 mm et des billes creuses d'un diamètre inférieur à 2 mm. Pour un tel matériau sont indiquées une densité de 600 kgm⁻³ et une résistance à la traction de 7,8 Mpa. La résistance spécifique est alors nettement inférieure à celle obtenue pour la plupart des mousses utilisées dans la fabrication de matériaux sandwich.

L'invention a pour objet de résoudre ce problème en proposant un matériau composite cellulaire de type décrit ci-dessus, offrant une bonne résistance mécanique et se présentant sous la forme d'un matériau réellement isotrope permettant par exemple son utilisation pour l'obtention de pièces moulées de formes complexes ou de pièces pressées.

Conformément à l'invention, ce résultat est obtenu avec un matériau composite cellulaire du type comprenant des billes de faible densité en matériau expansé noyées dans un liant composite constitué principalement d'une matrice en résine et d'une charge de renforcement se présentant sous la forme de fibres courtes ou de micro sphères ou des deux, caractérisé en ce que
la charge de renforcement du liant est composée essentiellement de fibres de longueur de l'ordre de 0,1 à 0,3 mm et/ou de micro sphères de diamètre d'environ 0,02 à 0,1 mm,
le diamètre des billes en matériau expansé étant compris entre 4 à 20 fois la longueur des fibres ou le diamètre des micro sphères de la charge de renforcement.

Les charges de renforcement pourront être du type décrit dans le document WO-A-99 29 770, publié au nom des inventeurs et faisant partie de l'art antérieur selon l'Article 54(3) CBE.

Par rapport à l'enseignement du brevet EP 0 714 755, les dimensions des charges de renforcement sont bien inférieures à la dimension des particules de faible densité pour éviter des points de fragilité.

Le liant constitue donc un véritable matériau composite dont les propriétés mécaniques sont supérieures à celles de la plupart des matériaux polymères qui peuvent être expansés.

Ce polyuréthane « composite cellulaire » peut avantageusement remplacer les mousses (PU par exemple) dans des applications à des structures sandwich grâce à une rigidité et résistance à la rupture plus élevées. Selon les sollicitations, le matériau peut être confectionné de façon plus résistante ou de façon plus légère en variant le taux volumique entre le liant composite et les billes de faible densité.

Un composite qui correspond aux deux exigences (l'isotropie et le renforcement) selon l'invention est réalisé avec une matrice à module de YOUNG élevé et à renforts entre quatre à vingt fois inférieure au diamètre des objets constituant la structure cellulaire.

En effet, le seul procédé économique pour obtenir les fibres avec une telle longueur est le broyage et les fibres obtenues présentent une distribution en longueur assez large.

Contrairement à ce qui pourrait être attendu, il n'est pas recommandable de choisir une longueur moyenne élevée, car ceci implique une forte augmentation de la viscosité du mélange et par conséquent des taux maximaux de charge au-delà le mélange ne peut plus être homogénéisé, de l'ordre de 10 à 15 % en volume seulement. Pour la même raison, la viscosité de la matrice (avant polymérisation) doit être inférieure à 1 Pas, sinon les mélanges ne peuvent plus être homogénéisés.

D'autre part, est connu d'existence d'une longueur critique au dessous de laquelle les renforts n'améliorent plus la résistance mécanique. Cette longueur critique est fonction du module de YOUNG de la matrice.

Dans le but d'obtenir une bonne résistance, la longueur critique ne doit pas être prise pour le moyen de la distribution mais de sorte que environ 90% des fibres soient supérieures à cette longueur.

Les matériaux réalisés selon l'invention sont obtenus par l'adaptation de la matrice à la distribution de longueur des fibres. Le taux volumique de renforts dans ce matériau composite varie entre 20 % et 35 % et le composite massif présente des résistances jusqu'à 190 Mpa en traction et 220 Mpa en compression. Ces valeurs sont deux à trois fois supérieures à la résistance mécanique des polymères couramment utilisés pour la fabrication des mousses dans des structures sandwichs.

L'homogénéité des mélanges permet de presser des structures cellulaires avec des parois de cellules d'épaisseur entre 0,1 et 0,3 mm et des densités du matériau alvéolaire comprises entre 100 et 300 kgm⁻³ qui peuvent avantageusement remplacer les mousses existantes dans des structures sandwichs.

Un gain considérable en temps et coût de fabrication de structures sandwichs est obtenu quand ils sont réalisés en posant les tissus et/ou nappes non tissés dans le moule à sec et effectuant l'imprégnation des peaux par une quantité de résine qui a été initialement ajoutée au mélange de fibres courtes et qui est chassée dans les peaux par le compactage de la structure alvéolaire. Cette procédure permet aussi d'éviter tout problème lié au collage des peaux sur une âme, bien connu dans la fabrication de structures sandwichs.

A titre d'exemple, des échantillons ont été réalisés avec les caractéristiques indiquées ci-dessus.

On a réalisé des produits dans lesquels les cellules du matériau final constituées par les billes de polystyrène expansées, enrobées du liant ayant une épaisseur entre 0,1 et 1 mm, les billes ayant un diamètre de 2 à 4 mm.

Le produit final est obtenu à partir d'une phase liquide du matériau composite (liant) qui est mélangé mécaniquement avec les billes en polystyrène. Le liant est un mélange d'une résine époxyde avec des fibres courtes de carbone et/ou de verre et/ou des microbilles de verre.

Le mélange ainsi obtenu peut être coulé (dans ce cas le matériau reste poreux) ou être pressé pour obtenir un produit final n'ayant plus de cavités avant polymérisation finale de la résine.

Ce matériau trouve une application tout à fait intéressante en tant que renfort à l'intérieur des structures à parois minces.

Il peut remplacer avantageusement, dans des applications identiques, les produits en carton ou en aluminium type nid d'abeilles déjà connus qui ne sont plus adaptés aux structures complexes et/ou tubulaires et/ou de faibles dimensions. Ces produits nécessitent en outre un usinage onéreux ce qui n'est pas le cas du produit conforme à l'invention.

Ce matériau peut également servir de support de grande légèreté permettant de remplacer le balsa, par exemple pour des raquettes de ping-pong.

Enfin, les noyaux ainsi obtenus n'absorbent pas d'eau contrairement aux nids d'abeilles, ce qui présente des avantages pour une utilisation en milieu aquatique, par exemple pour les bateaux (voile, accastillage).

Il peut également, par moulage, servir à l'obtention de pièces absorbant les chocs : éléments de carrosserie de voitures, casques, etc...

## Revendications

1. Matériau composite cellulaire du type comprenant des billes de faible densité en matériau expansé noyées dans un liant composite constitué principalement d'une matrice en résine et d'une charge de renforcement se présentant sous la forme de fibres courtes ou de micro sphères ou des deux, **caractérisé en ce que**
la charge de renforcement du liant est composée essentiellement de fibres de longueur de l'ordre de 0,1 à 0,3 mm et/ou de micro sphères de diamètre d'environ 0,02 à 0,1 mm,
le diamètre des billes en matériau expansé étant compris entre 4 à 20 fois la longueur des fibres ou le diamètre des micro sphères de la charge de renforcement.

2. Matériau selon la revendication 1, **caractérisé en ce que** les particules de faible densité sont des billes de polystyrène.

3. Matériau selon la revendication 2, **caractérisé en ce que** les billes ont un diamètre de 2 à 4 mm.

4. Matériau selon l'une quelconque des revendications 1 à 3, **caractérisé en ce que** le liant enrobant les particules de faible densité a une épaisseur de 0,1 à 1 mm.

5. Matériau selon l'une quelconque des revendications 1 à 4, **caractérisé en ce que** les micro sphères du liant sont des microbilles de verre.

6. Produit manufacturé, **caractérisé en ce qu'**il est obtenu à partir d'un matériau selon l'une quelconque des revendications 1 à 5.

## Patentansprüche

1. Zellförmiges Kompositmaterial von der Art, die Kügelchen geringer Dichte aus einem expandierten Material eingetaucht in ein Bindemittelkomposit enthält, das hauptsächlich aus einer Harz-Matrize und aus einer Verstärkungsanreicherung besteht, die sich in der Form von kurzen Fasern oder Mikrokugeln oder beiden zeigt, **dadurch gekennzeichnet, dass** die Verstärkungsanreicherung des Bindemittels im Wesentlichen zusammengesetzt ist aus Fasern der Länge in der Größenordnung zwischen 0,1 und 0,3 mm und/oder aus Mikrokugeln mit einem Durchmesser von ungefähr 0,02 bis 0,1 mm und dass die Durchmesser der Kügelchen aus expandiertem Material zwischen dem 4- bis 20-fachen der Länge der Fasern oder des Durchmessers der Mikrokugeln der Verstärkungsanreicherung betragen.

2. Material gemäß Anspruch 1, **dadurch gekennzeichnet, dass** die Teilchen geringer Dichte Kügelchen aus Polystyren sind.

3. Material gemäß Anspruch 2, **dadurch gekennzeichnet, dass** die Kügelchen einen Durchmesser zwischen 2 und 4 mm haben.

4. Material nach einem der Ansprüche 1 bis 3, **dadurch gekennzeichnet, dass** das Bindemittel die Teilchen geringer Dichte mit einer Stärke von 0,1 bis 1 mm umhüllt.

5. Material nach einem der Ansprüche 1 bis 4, **dadurch gekennzeichnet, dass** die Mikrokugeln des Bindemittels Mikrokügelchen aus Glas sind.

6. Hergestelltes Produkt, **dadurch gekennzeichnet, dass** man es erhält, wenn man von einem Material nach einem der Ansprüche 1 bis 5 ausgeht.

## Claims

1. Composite cellular material of the type which comprises low density balls, formed from expanded material, immersed in a composite bonding agent made up principally of a matrix, formed from resin, and a reinforcing charge, which is in the form of short fibres or of micro-spheres or of the two, **characterised in that** the reinforcing charge of the bonding agent is made up substantially of fibres of a length in the order of 0.1 to 0.3 mm and/or of micro-spheres of a diameter of about 0.02 to 0.1 mm, the diameter of the balls formed from expanded material being between 4 and 20 times the length of the fibres or the diameter of the micro-spheres of the reinforcing charge.

2. Material according to claim 1, **characterised in that** the low density particles are polystyrene balls.

3. Material according to claim 2, **characterised in that** the balls have a diameter of between 2 and 4 mm.

4. Material according to any of claims 1 to 3, **characterised in that** the bonding agent coating the low density particles has a thickness of between 0.1 and 1 mm.

5. Material according to any of claims 1 to 4, **characterised in that** the micro-spheres of the bonding agent are micro-balls of glass.

6. Manufactured product, **characterised in that** it is produced from a material according to any of claims 1 to 5.
